# EUROPÄISCHE PATENTANMELDUNG

(11) **EP 1 264 736 A2**
(43) Veröffentlichungstag der Anmeldung: **11.12.2002**
(21) Anmeldenummer: 02012154.7
(22) Anmeldetag: 01.06.2002
(51) Int. Cl.: B60R 5/00

(54) **Fahrrad-Halterung für den Transport von Fahrrädern im Innern eines Kraftfahrzeuges**

(30) Priorität: 05.06.2001 DE 20109338 U
(71) Anmelder: Swassek, Günter, 88349 Palling (DE)
(72) Erfinder: Swassek, Günter, 88349 Palling (DE)

(57) **Zusammenfassung**

Die Erfindung bezieht sich auf eine Fahrrad-Halterung (1), welche im Innern von Kraftfahrzeugen befestigt werden kann. Dazu bedient sie sich eines auswechselbaren Fixieradapters (8, F), der mit kraftfahrzeugspezifischen Befestigungs-Ausformungen (15) korrespondiert. Eine Abstimmung des Abstands einer Vorrichtung (3) zur Aufnahme einer Fahrrad-Vorderrad- Gabel (4) mit einer Montageplatte (2) ermöglicht eine freie Drehung und Positionierung der Fahrrad-Vorderrad-Gabel (Figur 1).

## Beschreibung

Die Erfindung bezieht sich auf eine Fahrrad-Halterung für den gesicherten Transport von Fahrrädern im Innern eines Kraftfahrzeuges gemäß dem Oberbegriff des Anspruches 1.

Zum Transportieren von Fahrrädern durch einen Personenkraftwagen dient üblicherweise ein auf dessen Dach befestigter Gepäckträger. Falls hierbei jedoch das Fahrrad beim Be- und/oder Entladen unvorsichtig gehandhabt wird, so kann sehr leicht die Fahrzeuglackierung beschädigt werden. Ferner entstehen während der Fahrzeugfahrt unangenehme Windgeräusche und es wird auch der Luftwiderstandsbeiwert erheblich verschlechtert. Ferner muss das Fahrrad gegen Diebstahl besonders gesichert sein.

Gegenstände gemäß dem Oberbegriff des Anspruches 1 sind bekannt und zahlreich in verschiedenen Dokumenten beschrieben. Es sind demgemäss auch bereits Fahrrad-Halterungen bekannt und in verschiedenen Dokumenten beschrieben, welche im Innern von Kraftfahrzeugen montiert werden können. Aus der Vielzahl dieser Beschreibungen sei das Dokument DE 42 22 024 A1 (Anmelder: Bayerische Motorenwerke AG, München) zitiert, in dem eine Fahrrad-Halterung der eingangs genannten Art erörtert ist.

Die dort gezeigte Fahrrad-Halterung ist auf einer Halteplatte befestigt, welche ihrerseits mittels Klettenband oder dergleichen lösbar auf der Rückseite einer umgelegten Rückenlehne eines Fahrzeugsitzes oder am Boden des Laderaumes eines Kraftfahrzeuges befestigbar ist. Die Fahrrad-Halterung selbst ist durch ein Aufnahmeteil gebildet, welches eine Fahrradgabel klemmbar aufnimmt.

Eine weitere Fahrrad-Halterung zur Aufnahme von Fahrrädern im Innern von Kraftfahrzeugen ist in der DE 196 36 977 A1 beschrieben. Dort wird vorgeschlagen, eine Fahrrad-Halterung zur klemmbaren Aufnahme einer Fahrrad-Vorderrad-Gabel so auszubilden, dass sie um eine Achse drehbar und um eine weitere, zur ersten Achse geneigte Achse schwenkbar ist. Die derart ausgestaltete Fahrrad-Halterung kann auf dem Boden des Kraftfahrzeuges oder an der Rückwand eines umgelegten Sitzes befestigt werden. Dazu ist eine Montageplatte vorgeschlagen, die auf dem Boden verschraubt oder genietet wird.

Eine Alternative soll die Klemmung in der Fahrrad-Halterungsschiene einer herausnehmbaren Fahrzeugrückbank darstellen, in welche eine nicht näher beschriebene Klemmvorrichtung eingeführt werden kann.

Aus der DE 296 16 675 U1 ist eine Fahrrad-Halterung bekannt, welche mittels einer Hilfsschiene im Innern am Boden eines Kraftfahrzeugs befestigt werden kann. Die Befestigungsvorrichtung für eine Vorderrad-Gabel ist bei diesem Vorschlag entlang der Hilfsschiene verschiebbar angeordnet. Die Hilfeschiene wird in mehreren Verankerungsplätzen mehrerer zu entfernender Fahrzeugsitze fixiert.

Diese beschriebenen Transportvorrichtungen sind brauchbar, aber sie sind sehr unhandlich zu handhaben, und nehmen beim Nichtgebrauch relativ viel Platz im Laderaum des Fahrzeuges ein. Vor allem aber sind sie aufwendig in ihrer Bauform und konstruktiv auf den jeweiligen Fahrzeugtyp abgestimmt und festgelegt. Ein Anwender muss beim Wechsel des Kraftfahrzeugs auch die Fahrrad-Halterungen für seine Fahrräder gegen neue auswechseln, welche auf diesen neuen Fahrzeugtyp zugeschnitten sind. Dies ist unpraktisch und unökonomisch, da ja die Fahrrad-Halterungen keinem Verschleiß unterliegen und somit eine nahezu unbegrenzte Lebensdauer haben. Trotzdem muss der Anwender beim Wechsel seines Kraftfahrzeuges auch die Fahrrad-Halterungen wechseln, da die bisher benutzten nicht mehr für sein neues Fahrzeug passen.

Der vorliegenden Erfindung liegt die Aufgabe zugrunde, eine Fahrrad-Halterung zu schaffen, die einfach aufgebaut und daher kostengünstig herstellbar ist, die einen nur geringfügigen Raum bei Nichtbenutzung beansprucht (sie kann beispielsweise im Handschuhfach untergebracht werden), und die vor allem universell in einer Vielzahl von Kraftfahrzeugtypen sowie mit Zusatznutzen auch außerhalb von Kraftfahrzeugen einsetzbar ist.

Diese Aufgabe wird von einer Fahrrad-Halterung mit den Merkmalen des Anspruches 1 gelöst. Vorteilhafte Ausgestaltungen der erfindungsgemäßen Fahrrad-Halterung sind den abhängigen Ansprüchen zu entnehmen.

Die Vorteile der Fahrrad-Halterung liegen in ihrem einfachen Aufbau, was sich sowohl im konstruktiven als auch im fertigungstechnischen Aufwand niederschlägt. Aus diesem Grund ist die Fahrrad-Halterung auch kostengünstig herstellbar und kann demgemäss dem Endkunden, der ja der Anwender ist, preiswert angeboten werden.

Anhand der Zeichnung wird die Erfindung mit Hilfe von Ausführungsbeispielen noch näher erläutert.

Es zeigt:
Figur 1 eine Fahrrad-Halterung im montierten Zustand im Querschnitt;
Figur 2 eine Variante einer Fahrrad-Halterung im montierten Zustand im Querschnitt;
Figur 3 eine Draufsicht auf die Fahrrad-Halterung gemäß Figur 2 und
Figur 4 eine Fahrrad-Halterung an einer Wandfläche.

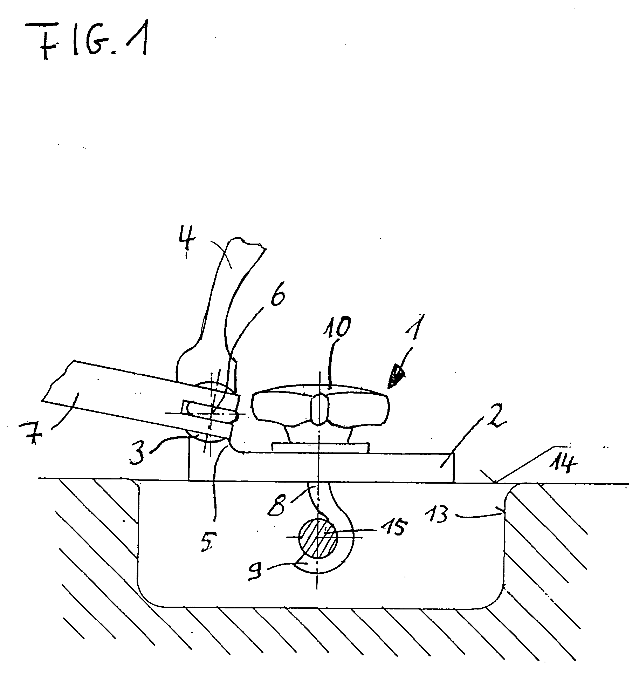

Eine in Figur 1 mit der Bezugsziffer 1 versehene Fahrrad-Halterung weist eine Montageplatte 2 und eine Gabel-Halterung 3 zur Aufnahme einer Vorderrad-Gabel 4 eines zu transportierenden Fahrrades auf, welches hier nicht weiter gezeigt und bezeichnet ist. Die Gabel-Halterung 3 besteht aus einem Fahrrad-Halterungsblock 5, der eine mit Mittelkreuz angedeutete Durchgangsbohrung 6 aufweist. Die Durchgangsbohrung 6 nimmt einen an sich bekannten Schnellspanner 7 auf, wie er auch zur Klemmung von Laufrädern in Rahmen und Gabel eines Fahrrades bekannt ist. Das zu transportierende Fahrrad wird von seinem Vorderrad befreit und die Gabel 4 in die Gabel-Halterung 3 eingesetzt und mittels Schnellspanner 7 fixiert. Um Vorderrad-Gabeln 4 unterschiedlicher Geometrie aufnehmen zu können, kann der Fahrrad-Halterungsblock 5 in seiner Länge veränderbar sein. Die effektive Länge der Schnellspanner 7 kann ebenfalls veränderbar und entsprechend der Gabelgeometrie einstellbar sein.

Die Montageplatte 2 der Fahrrad-Halterung 1 weist eine Fixiereinrichtung 8 auf, welche mittels einer Spannschraube 9 an der Montageplatte 2 befestigbar ist. Die Fixiereinrichtung 8 besteht in diesem Ausführungsbeispiel aus einem Haken der als Spannschraube 9 ausgebildet ist und aus einer Gewindemutter, die als Griffmutter 10 ausgebildet ist, wobei die Fahrrad-Halterung 1 mit dem Haken 9 in einer Befestigungs-Ausformung 13 im Boden 14 eines nicht näher bezeichneten Kraftfahrzeuges fixiert wird. Zu der Befestigungs-Ausformung 13 im Boden 14 des Kraftfahrzeuges gehören Haltestifte 15, mit denen die Fixiereinrichtung 8 korrespondiert, und die üblicherweise zur Fixierung von beispielsweise Fahrzeugsitzen dienen.

Die Fixiereinrichtung 8 ist in ihrer Ausgestaltung als Haken 9 weitgehend fahrzeugunspezifisch und kann von dem hier gezeigten Ausführungsbeispiel abweichen, wie die nachfolgenden Ausführungsbeispiele zeigen. Mit Hilfe der Befestigungsmittel - hier Gewinde-Griffinutter 10 - kann die Fixiereinrichtung 8 je nach Fahrzeugtyp gewechselt und mit der Montageplatte 2 der Fahrrad-Halterung 1 verbunden werden. Dabei ist gegebenenfalls lediglich der Haken 9 auszutauschen.

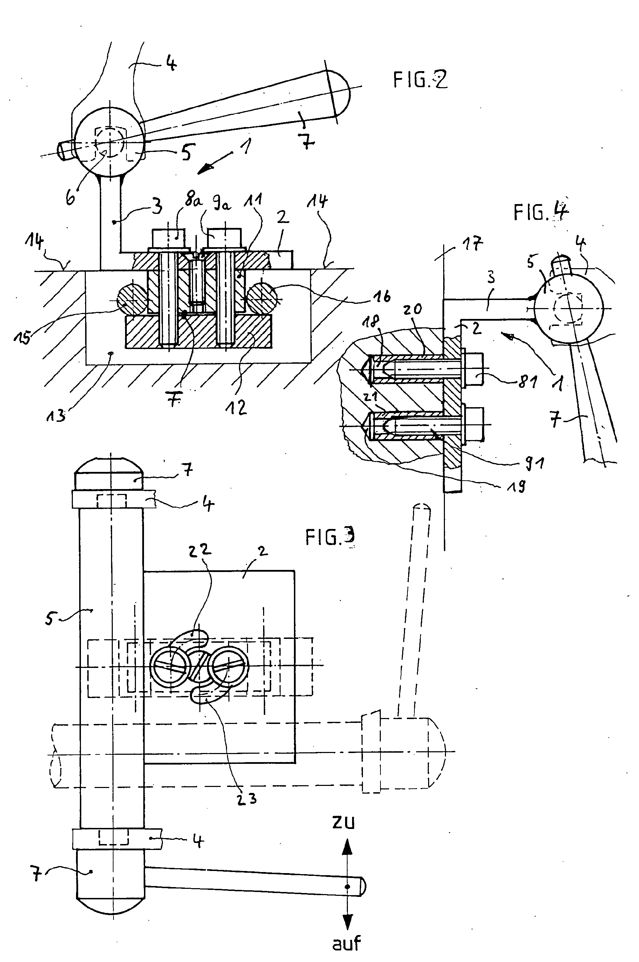

Eine weitere Ausführungsform ist in Figur 2 dargestellt. Hier sind gleichartige Elemente mit gleichen Bezugszeichen versehen, um die Übersichtlichkeit zu erhalten.

Mit der Bezugsziffer 1 ist demgemäss eine Variante der Fahrrad-Halterung versehen. Sie weist eine Montageplatte 2 und eine Gabel-Halterung 3 zur Aufnahme einer Vorderrad-Gabel 4 eines zu transportierenden Fahrrades auf, welches auch hier nicht weiter gezeigt und bezeichnet ist. Die Gabel-Halterung 3 besteht aus einem Fahrrad-Halterungsblock 5, der eine Durchgangsbohrung 6 aufweist. Die Durchgangsbohrung 6 nimmt einen an sich bekannten Schnellspanner 7 auf, wie er auch zur Klemmung von Laufrädern in Rahmen und Gabel eines'Fahrrades bekannt ist. Das zu transportierende Fahrrad wird von seinem Vorderrad befreit, die Gabel 4 in die Gabel-Halterung 3 eingesetzt und mittels Schnellspanner 7 fixiert. Um Vorderrad-Gabeln 4 unterschiedlicher Geometrie aufnehmen zu können, kann der Fahrrad-Halterungsblock 5 in seiner Länge veränderbar sein. Die effektive Länge der Schnellspanner 7 kann ebenfalls veränderbar und entsprechend der Gabelgeometrie einstellbar sein.

Die Montageplatte 2 der Fahrrad-Halterung 1 weist Befestigungsmittel - hier in Form von Schrauben 8a und 9a - auf, mit deren Hilfe eine von der Fixiereinrichtung 8 gemäss dem Ausführungsbeispiel in Figur 1 abweichende Fixiereinrichtung F an der Montageplatte 2 befestigbar ist. Die Fixiereinrichtung F besteht in diesem Ausführungsbeispiel aus einer Distanzplatte 11 und einem Klemmstück 12, mit welchem die Fahrrad-Halterung 1 in einer Befestigungs-Ausformung 13 im Boden 14 eines nicht näher bezeichneten Kraftfahrzeuges fixiert wird. Zu der Befestigungs-Ausformung 13 im Boden 14 des Kraftfahrzeuges gehören Haltestifte 15 und 16, mit denen der Fixieradapter F korrespondiert. In den Befestigungs-Ausformungen 13 werden üblicherweise mit Hilfe der Haltestifte 15 und 16 beispielsweise nicht näher gezeigte Fahrzeugsitze montiert.

Der Fixieradapter F ist in seiner Ausgestaltung fahrzeugspezifisch und kann abweichend von dem hier gezeigten Ausführungsbeispiel völlig anders aufgebaut sein, wie am Beispiel aus Figur 1 ersichtlich ist. Mit Hilfe der Befestigungsmittel - hier Schrauben 8a und 9a - kann der Fixieradapter F je nach Fahrzeugtyp gewechselt und mit der Montageplatte 2 der Fahrrad-Halterung 1 verbunden werden.

Für den Anwender bedeutet dies, dass er nur einmal eine Fahrrad-Halterung 1 zu erwerben braucht, und sich beim Fahrzeugwechsel gegebenenfalls lediglich eine andere Fixiereinrichtung 8 oder F, beispielsweise in Form eines anderen Hakens 9, zulegen muss. Dieses ist ersichtlich kostengünstiger, als jedes Mal die komplette Fahrrad-Halterung 1 gegen eine neue auszuwechseln. Die erfindungsgemäße Lösung, die Fahrrad-Halterung 1 mit einer einfachen Fixiereinrichtung F oder 8, beispielsweise in Form eines Hakens 9 zu versehen, kommt auch Besitzern von mehren, vor allem von mehreren unterschiedlichen Kraftfahrzeugen entgegen, da sie gegebenenfalls jeweils nur eine andere Fixiereinrichtung F oder einen anderen Haken 9 für das jeweilige Fahrzeug besitzen müssen, mit welchem die universelle Fahrrad-Halterung 1 ohne weiteres montierbar ist.

Durch den modularen Aufbau der Fahrrad-Halterung 1 ergibt sich ein weiterer erheblicher Vorteil für den Besitzer der erfindungsgemäßen Fahrrad-Halterung 1: Bei beabsichtigter längerer Nichtbenutzung der Fahrrad-Halterung 1 zum Transport von Fahrrädern im Kraftfahrzeug, - beispielsweise nach Ende der Saison - kann die Fahrrad-Halterung 1 ohne die Fixiereinrichtung F oder 8 in einfachster Weise an jeder beliebigen Wand befestigt werden. Diese Möglichkeit erweitert die Vielseitigkeit der Fahrrad-Halterung 1 enorm.

Mit ein und derselben Fahrrad-Halterung 1 können Fahrräder auf einfachste Weise sowohl im Kraftfahrzeug, in jeglicher anderen Art von Fahrzeug, als auch an Wänden und auf Böden in Gebäuden und dergleichen befestigt und wieder gelöst werden.

Zur Aufnahme der Fahrrad-Halterung 1 gemäß dem Ausführungsbeispiel aus Figur 1 wird in die Wand ein Loch gebohrt. Mit einer nicht dargestellten Schraube wird die Montageplatte 2 in dem Wandloch unter Zuhilfenahme von beispielsweise einem handelsüblichen Dübel angebracht und steht damit der Wandbefestigung des Fahrrades zur Verfügung.

Da die Montageplatte 2 und damit die darin befestigte Fahrradgabel 4 gegenüber ihrer Montagefläche 14 bzw. der besagten Wand drehbar ist, sind außer der bereits erwähnten Montagestellung weitere vorteilhafte Befestigungs-Stellungen des oder der Fahrräder möglich. Durch die Möglichkeit der Drehung der Gabel 4 in ihrer Befestigungsstellung verringert sich die seitliche Ausladung des Fahrradlenkers, so dass bei Verwendung mehrerer Fahrrad-Halterungen 1 eine platzsparende Transportmöglichkeit von Fahrrädern im Kraftfahrzeug entsteht. Dabei kann der seitliche Abstand der Fahrrad-Halterungen 1 geringer sein, als die jeweilige Lenkerbreite. Auch der seitliche Abstand der äußeren Fahrräder von den Innenwänden des Kraftfahrzeuges kann geringer sein, als die halbe Lenkerbreite.

Die Drehung der Gabel 4 mit ihrer Aufnahmevorrichtung 3 gegenüber ihrer jeweiligen Montagefläche 14 erfordert erfindungsgemäß eine Abstimmung der Aufnahmevorrichtung 3 in ihrer Höhe, d.h. in ihrem Abstand von der Montagefläche 14. Die Aufnahmevorrichtung 3 muss demnach so hoch bauen, dass die Fahrrad-Vorderrad-Gabel 3 sich in einer Ebene parallel zu der Montagefläche 14 drehen kann. Diese geometrische Abstimmung ist dann gegeben, wenn bei demontiertem Vorderrad das sogenannte Steuerrohr des Fahrrades senkrecht zur Montagefläche steht. Wenn diese Bedingung nicht eingehalten wird, kann sich die Gabel 4 bei einer Verdrehung aus ihrer Aufnahmevorrichtung 3 lösen. Auch ein unerwünschtes Verkanten kann auftreten.

Die Montage der Fahrrad-Halterung 1 gemäß dem Ausführungsbeispiel nach Figur 2 an einer Wand wird in Figur 4 dargestellt werden. Zur Aufnahme der Fahrrad-Halterung 1 werden in der Wand 17 zwei Löcher 18 und 19 gebohrt. Mit zwei Schrauben 81 und 91 wird die Montageplatte 2 in den Wandlöchern 18 und 19 unter Zuhilfenahme von beispielsweise handelsüblichen Dübeln 20 und 21 angebracht und steht damit der Wandbefestigung des Fahrrades zur Verfügung.

In Figur 3 ist dargestellt, dass die Montageplatte 2 über zwei kreisbogenförmige Langlöcher 22 und 23 verfügt. Mit Hilfe dieser Langlöcher 22 und 23 ist die Montageplatte 2 gegenüber der Fixiereinrichtung F bzw. dem Boden 14 des Kraftfahrzeuges oder einer sonstigen Befestigungsebene (Wand) drehbar. Das Maß für die mögliche Verdrehung wird durch die Dimensionierung der Langlöcher 22 und 23 bestimmt und ist ins Belieben des Fachmannes gestellt.

Die Drehbarkeit der Montageplatte 2 und damit der darin befestigten Fahrradgabel 4 ermöglicht weitere vorteilhafte Befestigungs-Stellungen des oder der Fahrräder im Kraftfahrzeug. Durch die Drehung der Gabel 4 in ihrer Befestigungsstellung verringert sich - wie bereits erwähnt - die seitliche Ausladung des Fahrradlenkers, so dass bei Verwendung mehrerer Fahrrad-Halterungen 1 eine platzsparende Transportmöglichkeit von Fahrrädern im Kraftfahrzeug entsteht. Dabei kann der seitliche Abstand der Fahrrad-Halterungen 1 geringer sein, als die jeweilige Lenkerbreite. Auch der seitliche Abstand der äußeren Fahrräder von den Innenwänden des Kraftfahrzeuges kann geringer sein, als die halbe Lenkerbreite.

Dazu muss wieder in erfindungsgemäßer Weise die Aufnahmevorrichtung 3 in ihrer Höhe, d.h. in ihrem Abstand von der Montagefläche 14 auf die Geometrie des Fahrrads abgestimmt sein. Eine geometrische Abstimmung ist dann gegeben, wenn bei demontiertem Vorderrad das sogenannte Steuerrohr des Fahrrads bei der Montage der Gabel 4 in der Aufnahmevorrichtung 3 senkrecht zur Montagefläche steht. Wenn diese Bedingung nicht eingehalten wird, kann sich die Gabel 4 bei einer Verdrehung aus ihrer Aufnahmevorrichtung 3 lösen. Auch ein unerwünschtes Verkanten kann auftreten.

Die erfindungsgemäße Fahrrad-Halterung hat zusammengefasst folgende Vorteile:
- Die Fahrrad-Halterung ist leicht zu montieren und wieder auszubauen
- Sie ist so konzipiert, dass der Radlenker jeweils bis zu 90° gedreht und somit platzsparend fixiert werden kann
- Die Winkelstellung der Fahrräder ist weitgehend beliebig
- Unter optimaler Ausnutzung haben in einer Großraumlimousine (Van) bis zu 6 Fahrräder Platz
- Die Fahrräder sind geschützt vor Diebstahl, Vandalismus Regen, Schmutz und Fahrtwind
- Die Fahrräder werden im Fahrzeuginneren sicher befestigt (Insassenschutz) und können leicht wieder gelöst werden
- Die Fahrrad-Halterung kann mittels ihrer Fixiereinrichtung in vorhandenen fahrzeugspezifischen Befestigungs-Ausformungen befestigt werden
- Die Fahrrad-Halterung ist klein, leicht, handlich und nimmt bei Nichtbenutzung kaum Platz in Anspruch (siehe Handschuhfach)
- Die Fahrrad-Halterung ist durch ihre austauschbare Fixiereinrichtung universell in verschiedenen Fahrzeugen verwendbar
- Der modulare Aufbau der Fahrrad-Halterung ermöglicht ihre Verwendung auch außerhalb von Kraftfahrzeugen
- Die Fahrrad-Halterung ist preiswert und wartungsfrei

Die Befestigung des Hinterbaus des Fahrrades ist von der Erfindung nicht betroffen und ins Belieben des Anwenders gestellt. Sie kann beispielsweise durch Spannriemen erfolgen.

## Patentansprüche

1. Fahrrad-Halterung für den gesicherten Transport von Fahrrädern in Kraftfahrzeugen, mit einer Montageplatte und einer damit fest verbundenen Vorrichtung zur Aufnahme einer Fahrrad-Vorderrad-Gabel, wobei die Montageplatte im Innenraum des Kraftfahrzeugs auf einer Montagefläche mittels einer Fixiereinrichtung befestigbar ist, **dadurch gekennzeichnet, dass** die Fixiereinrichtung (F, 8) als verspannbares Element (9, 11, 12) ausgebildet ist, mittels dem die Vorrichtung zur Aufnahme der Fahrrad-Vorderrad-Gabel (3) im Zusammenwirken mit der Montageplatte (2) in jeweils einer korrespondierenden Befestigungs-Ausformung (13) des Kraftfahrzeugs befestigbar ist, und dass die Vorrichtung (3) zur Aufnahme der Vorderradgabel (4) von der Montageplatte (2) derart beabstandet ist, dass die Vorderradgabel (4) mit der Aufnahmevorrichtung (3) nach Lösung der Verspannung in der Befestigungsausformung (13) frei drehbar und beliebig positionierbar ist.

2. Fahrrad-Halterung nach Anspruch 1, **dadurch gekennzeichnet, dass** das verspannbare Element als Haken (9) ausgebildet ist und an seinem dem Haken (9) gegenüberliegenden Ende ein Gewinde trägt, mittels dem es im Zusammenwirken mit einer Gewindemutter (10) in der Befestigungs-Ausformung (13) des Kraftfahrzeugs verspannbar ist.

3. Fahrrad-Halterung nach Anspruch 1, **dadurch gekennzeichnet, dass** das verspannbare Element als Schraube ausgebildet ist.

4. Fahrrad-Halterung nach Anspruch 2, **dadurch gekennzeichnet, dass** die Gewindemutter als Griff- oder Rändelmutter (10) ausgebildet ist.

5. Fahrrad-Halterung nach Anspruch 1, **dadurch gekennzeichnet, dass** die Verspannung des Elements (9) durch eine Klemmvorrichtung erfolgt.

6. Fahrrad-Halterung nach Anspruch 6, **dadurch gekennzeichnet, dass** die Klemmvorrichtung von einem Exzenter gebildet wird.

7. Fahrrad-Halterung nach Anspruch 1, **dadurch gekennzeichnet, dass** das verspannbare Element als Klemmstück (12) mit Distanzplatte (11) ausgebildet ist, welches mittels Schrauben (8a, 9a) in der Befestigungs-Ausformung (13) des Kraftfahrzeugs verspannbar ist.
